# EUROPEAN PATENT APPLICATION

(11) **EP 3 904 206 A1**
(43) Date of publication of application: **03.11.2021**
(21) Application number: 19902861.4
(22) Date of filing: 14.10.2019
(51) Int. Cl.: B64D 1/18, A01M 7/00, G01F 23/00

(54) **INTELLIGENT PESTICIDE TANK ASSEMBLY AND PLANT PROTECTION MACHINERY**

(30) Priority: 29.12.2018 CN 201811640758
(71) Applicant: Guangzhou Xaircraft Technology Co., Ltd, Tianhe District Guangzhou, Guangdong 510000 (CN)
(72) Inventor: CHEN, Zhang, Guangzhou, Guangdong 510000 (CN)
(74) Representative: Dilg, Haeusler, Schindelmann Patentanwaltsgesellschaft mbH
(86) International application number: PCT/CN2019/111080
(87) International publication number: WO 2020/134368

(57) **Abstract**

Disclosed are an intelligent pesticide tank assembly (100) and a plant protection machinery. The intelligent pesticide tank assembly comprises a cover body (2) and a measuring assembly (3), wherein the measuring assembly can be arranged to be extended into a pesticide tank body (1), and the cover body is arranged to be capable of being connected to the pesticide tank body and to enable the measuring assembly to be pressed and fixed onto the pesticide tank body. When the intelligent pesticide tank assembly is disassembled, the measuring assembly can be axially inserted or pulled out, and is then pressed and fixed by using the cover body, so that the measuring assembly is prevented from rotating together with the cover body when the cover body is tightened, and the disassembly of various components can thus be easily completed.

## Description

### Cross-Reference to Related Applications

This disclosure claims priority to Chinese Patent Application No. 201811640758.6 filed with the Chinese Patent Office on December 29, 2018, entitled "Intelligent Pesticide Tank Assembly and Plant Protection Machinery", which is incorporated herein by reference in its entirety.

### Technical Field

The present disclosure relates to the field of plant protection equipment, in particular, to an intelligent pesticide tank assembly and a plant protection machinery.

### Background Art

With the development of agricultural technology, for example, plant protection machineries (plant protection drone) are used more and more in large-scale operations such as pesticide spraying. In the above, a plant protection drone equipped with an intelligent pesticide tank can monitor in real-time the current dose, so as to realize intelligent operations such as reasonably planning operation paths and returning for dosing in due time.

In relevant technologies, some liquid storage tanks are provided with a liquid level sensor which can measure the liquid level in the liquid storage tank. In the above, the liquid level sensor is integrated on the cover of the liquid storage tank. Therefore, the above relevant technologies have the defect that when the cover of the liquid storage tank is opened or closed, the integrated liquid level sensor will be moved together, which is inconvenient in use.

### Summary

The purposes of the present disclosure comprise, for example, providing an intelligent pesticide tank assembly, to solve the problem in the related technologies that it is inconvenient to use the liquid storage tank, and the cover body of the intelligent pesticide tank assembly is disposed independently relative to, for example, a measuring assembly which is configured to measure liquid level, so as to make the operations during disassembling, assembling and operating convenient.

The purposes of the present disclosure further comprise providing a plant protection machinery, and it comprises the above-mentioned intelligent pesticide tank assembly, and meanwhile, it can also solve the problem in the relevant technologies that it is inconvenient to use the liquid storage tank.

The embodiment of the present disclosure can be achieved as follow.

The embodiment of the present disclosure provides an intelligent pesticide tank assembly, comprising a cover body and a measuring assembly, wherein the measuring assembly can be mounted to extend into a pesticide tank body, and the cover body is arranged to be able to be connected to the pesticide tank body and to enable the measuring assembly to be pressed and fixed onto the pesticide tank body.

Optionally, the pesticide tank body is provided with a mounting hole, the measuring assembly comprises a cover body supporting portion supporting on the top edge of the mounting hole, and the cover body can be configured to be pressed onto the cover body supporting portion.

Optionally, the cover body comprises a circumferential wall and a top wall, wherein the circumferential wall is provided with internal threads at the inner side which are configured to be threadedly connected to the mounting hole, and the cover body is pressed onto the cover body supporting portion through the bottom side of the top wall.

Optionally, the measuring assembly comprises an accommodating cavity and a mainboard mounted in the accommodating cavity, and the mainboard is electrically connected with a liquid level sensor which extends into the pesticide tank body.

Optionally, the measuring assembly comprises an upper housing body and a lower housing body, and the upper housing body is detachably and hermetically connected to the lower housing body to form the accommodating cavity for accommodating the mainboard.

Optionally, the measuring assembly further comprises a sensor casing which extends from the lower housing body into the pesticide tank body, and the liquid level sensor passes through the lower housing body and extends into the sensor casing.

Optionally, the sensor casing comprises a plurality of casing sections which are detachably connected to each other.

Optionally, the measuring assembly further comprises a floater guide rod which extends in parallel to the sensor casing, and a floater which is configured to trigger the liquid level sensor is slidably sleeved on the floater guide rod.

Optionally, the floater guide rod is provided with a clip at one end, which is configured to be clamped and fixed with a clamping groove in the top portion of the sensor casing, and the floater guide rod is provided with a limit piece at the other end, which is configured to be fixed with the bottom portion of the sensor casing through a threaded end cover.

Optionally, the lower housing body is provided with a circular groove in the periphery at the side towards the upper housing body, and a sealing ring is provided in the circular groove; and the upper housing body is tightly pressed onto the sealing ring and fixed to the lower housing body by a second threaded fastener which passes through the housing body connecting portion of the upper housing body.

Optionally, the lower housing body is provided with a connecting tube, the connecting tube comprises an air flow channel which is isolated from the accommodating cavity, and the air flow channel is provided so that the inner cavity of the pesticide tank body is communicated with outer space.

Optionally, the upper housing body is provided with a positioning groove at the housing body connecting portion, and the connecting tube on the lower housing body passes through the positioning groove and extends, to define the circumferential relative position of the upper housing body and the lower housing body.

Optionally, the cover body is provided with an airflow orifice, the connecting tube is connected with a ventilating tube, and the inner cavity of the pesticide tank body is in communication with outer space sequentially through the ventilating tube, the connecting tube and the airflow orifice.

Optionally, the ventilating tube comprises at least one complete spiral, and the lower housing body is further provided with a communicating tube which is spaced apart from the connecting tube; and the ventilating tube is connected to the connecting tube at one end and connected to the communicating tube at the other end, and communicates with the inner cavity of the pesticide tank body through the communicating tube.

Optionally, the communicating tube is provided with a notch in the side wall, the ventilating tube is inserted into the communicating tube, and can communicate with the inner cavity of the pesticide tank body through the notch.

Optionally, the cover body is in a cylindrical shape, and comprises a large diameter part and a small diameter part that are axially connected to each other, the outer diameter of the large diameter part is larger than the outer diameter of the small diameter part; the inner circumferential wall of the large diameter part is provided with internal threads threadedly connected to the mounting hole of the pesticide tank body; and the large diameter part is provided with alternatively arranged concave parts and convex parts on the outer circumferential wall, and the airflow orifice is provided in the small diameter part.

Optionally, the measuring assembly is provided with a button circuit board mounted on the upper housing body, and the button circuit board is electrically connected to the mainboard through a spring thimble connector.

Optionally, the cover body is provided with a center through hole, and the upper housing body is provided with a protruding portion cooperating with the center through hole, so as to allow to control the buttons on the button circuit board through the center through hole.

The embodiments of the present disclosure further provide a plant protection machinery which comprises the above intelligent pesticide tank assembly.

Compared with the prior art, the embodiments of the present disclosure have the following advantageous effects, for example,
through the above technical solutions, when the intelligent pesticide tank assembly of the embodiment of the present disclosure is assembled and disassembled, the measuring assembly can be inserted or pulled out along the axial direction of the mounting hole, and then pressed and fixed using the cover body, and thus the measuring assembly is prevented from rotating simultaneously, for example, when the cover body is tightened, and the disassembly and assembly of various components can thus be easily accomplished.

### Brief Description of Drawings

In order to more clearly illustrate technical solutions of embodiments of the present disclosure, the accompanying drawings which need to be used in the embodiments will be introduced briefly below, and it should be understood that the accompanying drawings below merely show some embodiments of the present disclosure, therefore, they should not be considered as limitation to the scope, and those ordinarily skilled in the art still could obtain other relevant drawings according to these accompanying drawings without using any inventive effort.
FIG. 1 is a schematic view of the structure of the intelligent pesticide tank assembly provided by the present embodiment;
FIG. 2 is a schematic view of the structure when the cover body is cooperated with the measuring assembly;
FIG. 3 is a view of the breakdown structure when the cover body is cooperated with the measuring assembly in FIG. 2;
FIG. 4 is a partially enlarged view of A in FIG. 3;
FIG. 5 is a three-dimensional structure view of the cover body in FIG. 3;
FIG. 6 is a schematic view of the structure of the measuring assembly from one angle of view provided by the present embodiment;
FIG. 7 is a schematic view of the structure of the measuring assembly from another angle of view provided by the present embodiment, wherein the ventilating tube is removed;
FIG. 8 is a schematic view of the structure of the upper housing body of the measuring assembly in FIG. 6;
FIG. 9 is a schematic view of the structure of the lower housing body and a basic casing section of the measuring assembly in FIG. 6; and
FIG. 10 is a schematic view of the structure of the (continuous) casing section of the measuring assembly in FIG. 6.

Reference signs: 100-intelligent pesticide tank assembly; 1-pesticide tank body; 11-mounting hole; 111-external thread; 12-inner cavity; 2-cover body; 201-circumferential wall; 202-top wall; 203-internal thread; 21-airflow orifice; 22-center through hole; 23-large diameter part; 231-concave portion; 232-convex portion; 24-small diameter part; 3-measuring assembly; 301-accommodating cavity; 302-mainboard; 303-liquid level sensor; 304-upper housing body; 3041-protruding portion; 3042-positioning groove; 3043-sink groove; 3044-cover body supporting portion; 3045-housing body connecting portion; 305-lower housing body; 3051-connecting tube; 30511-air flow channel; 3052-circular groove; 3053-communicating tube; 3053a-notch; 306-sensor casing; 3061-casing section; 3062-threaded portion; 3063-clamping groove; 3064-outer gear portion; 306a-basic casing section; 306b-continous casing section; 306c-bottom end casing section; 307-ventilating tube; 308-button circuit board; 309-spring thimble connector; 310-floater guide rod; 311-floater; 312-sealing ring; 313-waterproof silicone; 314-first threaded fastener; 315-button film; 316-second threaded fastener; 317-clip; 318-threaded end cover; 319-limit piece; 3191-inner gear portion; 200-outer space.

### Detailed Description of Embodiments

The embodiments of the present disclosure will be described below in details in conjunction with accompanying drawings. It should be understood that the specific embodiments described herein are only used to describe and explain the present disclosure, but are not intended to limit the present disclosure.

It should be noted that the same reference signs and letters in the following accompanying drawings indicate the same terms, and therefore, as along as a term is defined in a figure, it need not be further defined or explained in the figures thereafter.

In the description of the present disclosure, if the terms "center", "upper", "lower", "left", "right", "vertical", "horizontal", "inner", "outer" and the like appear therein, it should be noted that the orientation or position relations indicated by such terms are based on the orientation or position relations shown in the accompanying drawings, or such orientation or position relations are commonly arranged when the product according to the present disclosure is used, and they are just intended to conveniently describe the present disclosure and simplify the description, and are not intended to indicate or imply that the devices or elements as indicated should have specific orientations or should be configured and operated in specific orientations, and thus they should not be construed as limitations to the present disclosure.

In addition, if the terms "first", "second", "third" and the like appear herein, they are only intended for differentiated description and shall not be construed to indicate or imply relative importance.

In the description of the present disclosure, it should also be noted that, unless otherwise clearly specified and defined, terms "dispose", "mount", "link", "connect" and the like should be understood in a broad sense, for example, they can be a fixed connection, a detachable connection, or an integral connection; they can be a mechanical connection or an electrical connection; they can be a direct connection or an indirect connection through an intermediate medium, and they can be the internal communication between two elements. For a person skilled in the art, they may understand the specific meaning of the above-mentioned terms in the present disclosure according to specific circumstances.

The following description relates to multiple technical improvements of the intelligent pesticide tank assembly, and in the case of no conflict, the technical improvements can be combined partly or wholly with each other in an appropriate manner. It can be understood that, without departing from the technical idea of the present disclosure, simple variations can be made to the relevant structures and connection relations in the intelligent pesticide tank assembly to obtain other varied technical solutions. During the use of the intelligent pesticide tank assembly, the cover body and the measuring assembly are vulnerable parts, and at the same time, the intelligent pesticide tank assembly is not necessarily defined to comprise a pesticide tank body connected with it.

In relevant technologies, some liquid storage tanks for plant protection machineries are usually provided with a liquid level sensor, the liquid level sensor triggers magnetic switches at different heights through the floater which changes with the liquid level, and thus can measure the liquid level in the liquid storage tank. However, the liquid level sensor is usually integrated on the cover of the liquid storage tank, the cover of the liquid storage tank comprises an upper cover and a lower cover by which an accommodating space is defined, and a processor for connecting the liquid level sensor is disposed in the accommodating space. The above relevant technologies have the following defects: when the cover of the liquid storage tank is opened or closed, the integrated liquid level sensor will be moved together, and thus it is inconvenient in use.

The intelligent pesticide tank assembly 100 provided by the present embodiment can solve the technical problem. Specifically, the intelligent pesticide tank assembly 100 provided by the present embodiment will be described below in details.

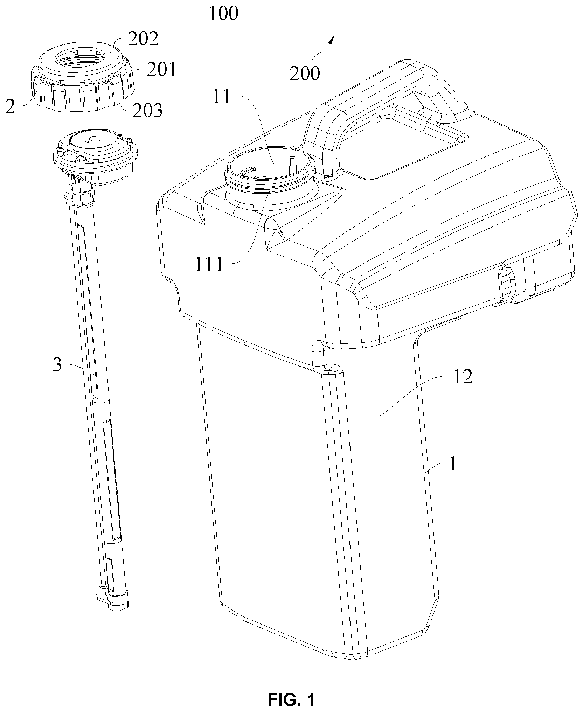

FIG. 1 shows an intelligent pesticide tank assembly 100 which can be used in plant protection machineries, for example, a plant protection drone and the like, and it comprises a pesticide tank body 1, a cover body 2 and a measuring assembly 3. The pesticide tank body 1 can be formed into a structure with a generally inverted L-shaped cross-section, and thus it has a relative large volume and can be conveniently mounted to the main body of the plant protection drone. The cover body 2 and the measuring assembly 3 can be mounted to a mounting hole 11 formed in the pesticide tank body 1. Generally, the mounting hole 11 is formed in the top wall of the pesticide tank body 1, and used as a liquid injection hole for injecting pesticide liquid. When the pesticide liquid within the inner cavity 12 of the pesticide tank body 1 is sprayed completely or is less than a predetermined amount, the cover body 2 and the measuring assembly 3 can be disassembled and injected with pesticide liquid through the mounting hole 11. After the pesticide liquid injection is accomplished, the measuring assembly 3 is then mounted to extend into the pesticide tank body 1, the cover body 2 is connected to the mounting hole 11 of the pesticide tank body 1, and the measuring assembly 3 is pressed and fixed onto the pesticide tank body 1.

Specifically, in the description of the present embodiment, in the case of no contrary explanation, the used orientation terms such as "top portion", "top wall", "bottom portion" and "bottom end" usually indicate the orientations as shown in FIG. 1, for example, the top portion of the measuring assembly 3 indicates the portion of the measuring assembly 3 close to the cover body 2; the bottom portion of the measuring assembly 3 indicates the portion (in the mounting state) of the measuring assembly 3 which extends into the pesticide tank body 1 and is close to the bottom of the tank. Likewise, the used orientation terms such as "inner" and "outer" indicate the interior or exterior with respect to the contour of the part itself.

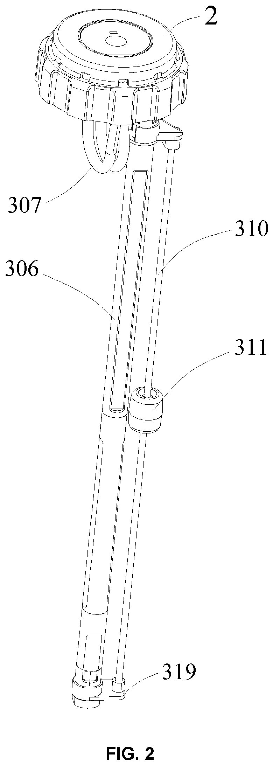

In combination with FIGs. 1 and 2, in the mounting state, the measuring assembly 3 can pass through the mounting hole 11 and extends into the pesticide tank body 1, so as to measure in real-time the parameters such as the liquid level and the temperature of the pesticide liquid therein. The cover body 2 is connected to the mounting hole 11 and presses and fixes the measuring assembly 3 to the pesticide tank body 1 (specifically, it is fixed in the mounting hole 11). In the present embodiment, the mounting hole 11 of the pesticide tank body 1 is formed with external threads 111 on the outer circumferential wall, and the inner circumferential wall of the cover body 2 is formed with internal threads 203 which are cooperated with the external threads 111, and thus, the measuring assembly 3 is pressed and fixed and thus the mounting hole 11 is sealed through tightening the cover body 2 to the mounting hole 11. Optionally, the cover body 2 can also be connected to the mounting hole 11 through clamping and other manners.

In the present embodiment, the cover body 2 of the intelligent pesticide tank assembly 100 is arranged individually relative to the measuring assembly 3 (the measuring assembly 3 is not integrated on the cover body 2), and thus, during assembly and disassembly, the measuring assembly 3 can be inserted or pulled out along the axial direction of the mounting hole 11 (specifically, it is a round hole), and is then pressed and fixed by using the cover body 2. Thus, the measuring assembly 3 is prevented from rotating together with the cover body 2 when the cover body 2 is tightened, and the assembly and disassembly of various components can thus be easily completed. Meanwhile, during assembly and disassembly, the agitation of the pesticide liquid in the pesticide tank body 1, which is rendered by the rotation of the measuring assembly 3 due to the cover body 2, is prevented, thereby reducing the possibility of problems such as deformation, damage and mismeasurement and the like of the measuring assembly 3 caused by the impact of the pesticide liquid.

Referring to FIGs. 2-10, the measuring assembly 3 of the intelligent pesticide tank assembly 100 can generally be classified into a liquid level sensing module (extending into the pesticide tank body 1) configured to sense information of the pesticide liquid and a data processing module configured to receive and process the information of the pesticide liquid, wherein the liquid level sensing module can comprise a liquid level sensor 303 extending into the pesticide tank body 1, and the data processing module can comprise a mainboard 302 and the like electrically connected to the liquid level sensor 303. As the liquid level sensor 303 needs to be electrified during operation, the mainboard 302 and the liquid level sensor 303 should be prevented from contacting the pesticide liquid in the pesticide tank body 1. The liquid level sensor 303 and the mainboard 302 herein can both adopt the products in the prior art, and therefore, the principle, the effect and the like are not repeated herein.

In the meantime, in order that the pesticide liquid in the pesticide tank body 1 is sprayed out smoothly, a pesticide tank ventilating structure can be provided, and configured to keep the pressure balance between the inner cavity 12 of the pesticide tank body 1 and the outer space 200. By adopting the traditional technology, for example, separately arranging the liquid level sensing element and the pesticide tank ventilating structure, damage to the electronic devices of the mainboard 302 rendered by the pesticide liquid moisture from the exhaust of the ventilating structure of the pesticide tank can avoided satisfactorily, but it increases the manufacturing cost and complexity of the structure of the intelligent pesticide tank assembly 100.

Thus, in the present embodiment, the pesticide tank ventilating structure can be integrated and disposed in the measuring assembly 3, and in a precondition of reducing the complexity of the structure, the pesticide liquid moisture can be prevented from contacting the mainboard 302 by disposing the mainboard 302 and an air flow channel 30511. Specifically, the measuring assembly 3 can comprise an upper housing body 304 and a lower housing body 305, the upper housing body 304 is detachably and hermetically connected to the lower housing body 305 to form an accommodating cavity 301, and the mainboard 302 is mounted in the accommodating cavity 301. The pesticide tank ventilating structure can comprise the air flow channel 30511 configured for ventilating, and the pesticide liquid moisture can be prevented from contacting the mainboard 302 as long as the air flow ventilating channel 30511 is isolated from the accommodating cavity 301. It should be explained that the two housing bodies of the measuring assembly 3 can also be arranged at left and right sides, for example, it comprises a left housing body and a right housing body, and the left housing body and the right housing body can be detachably and hermetically connected to each other to form the accommodating cavity 301.

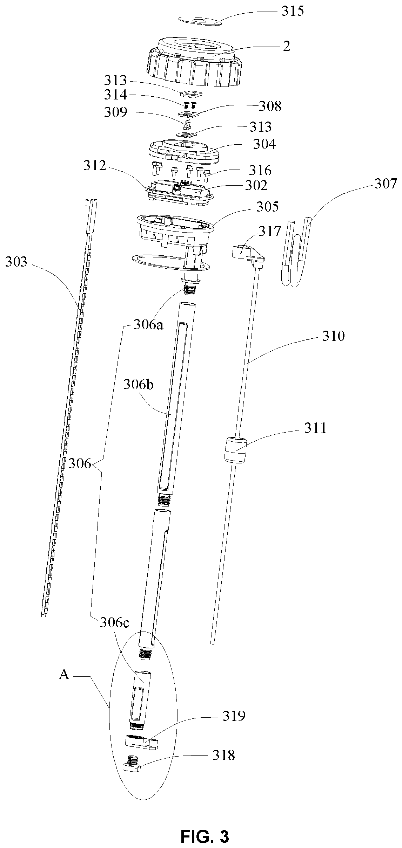

In the present embodiment, as shown in FIGs. 3 and 6-9, the lower housing body 305 can comprise an edge portion on the mounting hole 11 of the pesticide tank body 1, and the edge portion forms a concave cavity, in a surrounding manner, which constitutes the main body portion of the accommodating cavity 301. The lower housing body 305 is provided with a connecting tube 3051, the connecting tube 3051 comprises the air flow channel 30511 which is isolated from the accommodating cavity 301, so that the inner cavity 12 of the pesticide tank body 1 is in communication with the outer space 200. Thus, the pressure balance between the inner cavity 12 of the pesticide tank body 1 and the outer space 200 can be kept, so that the pesticide liquid can be discharged smoothly. Meanwhile, through integrating the pesticide tank ventilating structure on the measuring assembly 3, it is unnecessary to additionally dispose a vent hole in the pesticide tank body 1, the structure for liquid injecting, measuring and ventilating can be disposed jointly in the mounting hole 11 as the liquid injection hole, and then the complexity of the structure of the intelligent pesticide tank assembly 100 is reduced. It should be explained that the abovementioned "outer space 200" indicates the space outside the intelligent pesticide tank assembly 100. In other words, through the connecting tube 3051, the inner cavity 12 of the pesticide tank body 1 can be kept in communication with the air.

In the above, when the air is ventilated through the connecting tube 3051 on the lower housing 305 to keep the internal and external air pressure balance of the pesticide tank body 1, the pesticide liquid in the pesticide tank body 1 may overflow from the connecting tube 3051 due to vibration and the like. Thus, a ventilating tube 307 can be connect to the connecting tube 3051 at the side towards the pesticide tank body 1, and therefore, even if the pesticide liquid in the pesticide tank body splashes during the working process, it cannot directly overflow to the outer space 200 through the connecting tube 3051. Specifically, the cover body 2 is formed with the airflow orifice 21, and the inner cavity 12 of the pesticide tank body 1 is communicated with the outer space 200 sequentially through the ventilating tube 307, the connecting tube 3051 and the airflow orifice 21.

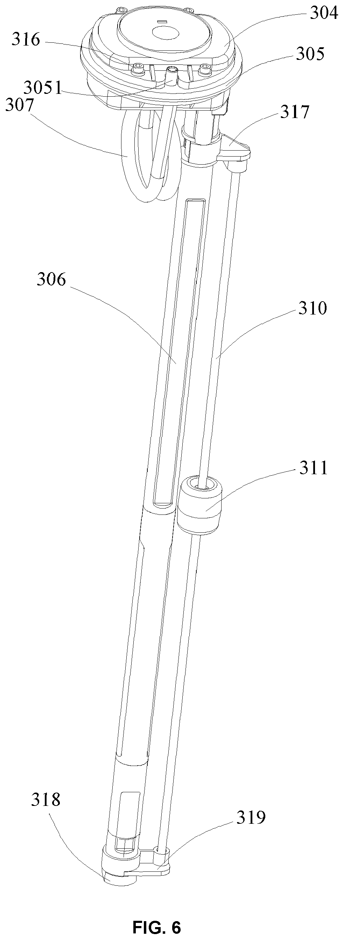

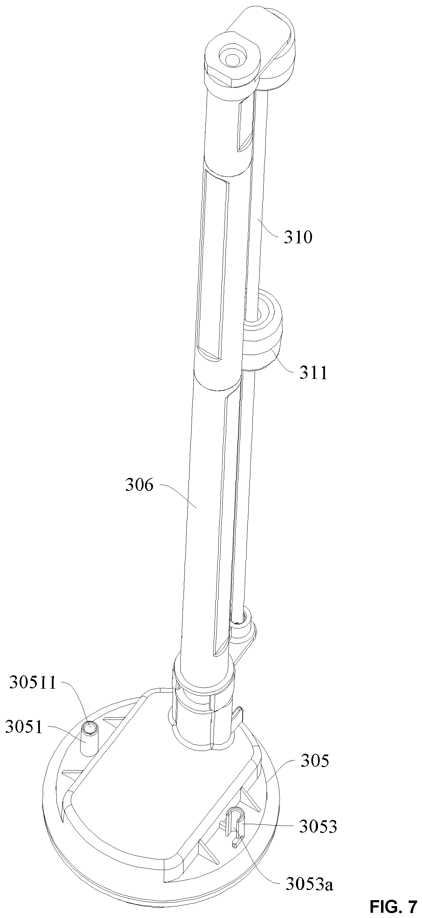

In the present embodiment, the ventilating tube 307 comprises at least one complete spiral. As shown in FIGs. 6 and 7, the lower housing body 305 can be provided with the above-mentioned connecting tube 3051 and a communicating tube 3053 which is spaced apart from the connecting tube 3051; the ventilating tube 307 is connected to the connecting tube 3051 at one end, and the ventilating tube 307 is connected to the communicating tube 3053 at the other end and communicates with the inner cavity 12 of the pesticide tank body 1 through the communicating tube 3053. The middle part between the two ends extends spirally and is provided with at least one complete spiral. Thus, if the pesticide liquid splashes at the communicating tube 3053 and enters the ventilating tube 307, this part of pesticide liquid needs to overcome gravity and pass through the top portion of the spiral, then it may overflow from the connecting tube 3051, and therefore, such arrangement can effectively reduce the possibility of overflowing of the pesticide liquid. The ventilating tube 307 can be a flexible tube made of rubber and the like, which is connected by a tie piece to form the complete spiral. The tie piece herein indicates a connecting element which can bunch two or more tube sections together.

The ventilating tube 307 can be communicated to the inner cavity 12 of the pesticide tank body 1 at the communicating tube 3053 by multiple methods in the prior art. In the structure as shown in FIG. 7, the communicating tube 3053 is formed with a notch 3053a in the side wall, the ventilating tube 307 is inserted in the communicating tube 3053 and supported by a protruding structure (not marked) at the root position of the communicating tube 3053, so as to communicate with the inner cavity 12 of the pesticide tank body 1 through the notch 3053a. Optionally, it can also be that the communicating tube 3053 is not disposed with the notch 3053a, the ventilating tube 307 is interference fitted on the communicating tube 3053, and then, the communication between the ventilating tube 307 and the inner cavity 12 of the pesticide tank body 1 is achieved by drilling holes in the sidewalls of the ventilating tube 307 and the communicating tube 3053.

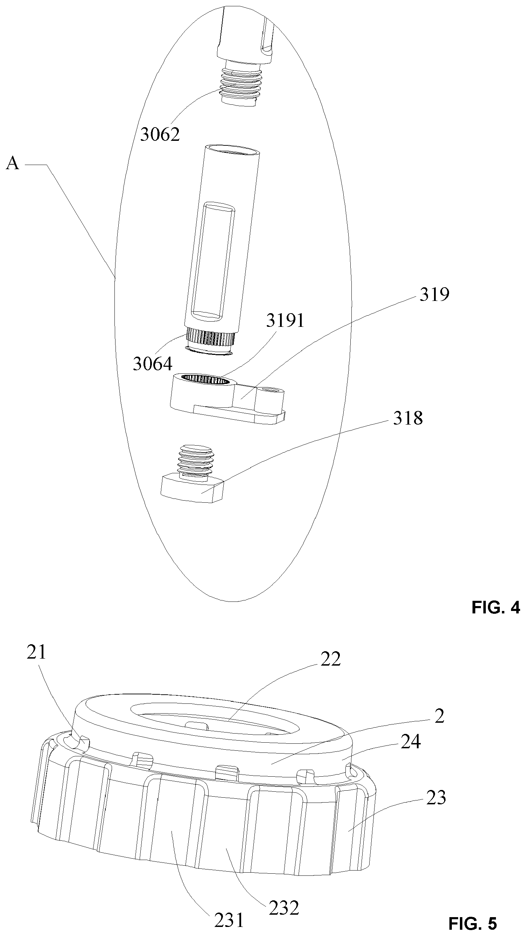

At the other end of the connecting tube 3051, it can be communicated with the outer space 200 through the airflow orifice 21 in the cover body 2. As shown in FIG. 5, the cover body 2 is generally in a cylindrical shape, and it can comprise a large diameter part 23 and a small diameter part 24 that are axially connected to each other; the inner circumferential wall of the large diameter part 23 is formed with internal threads 203 threadedly connected to the mounting hole 11 of the pesticide tank body 1; the outer circumferential wall of the large diameter part 23 is formed with a concave part 231 and a convex part 232 which are alternatively arranged, and an operator can screw the cover body 2 through the convex part 232 to achieve assembling and disassembling. The airflow orifice 21 is formed in the small diameter part 24. Thus, when the pesticide liquid overflows through the airflow orifice 21, as the outer diameter of the large diameter part 23 is larger than the outer diameter of the small diameter part 24, the pesticide liquid can be prevented from flowing to the radial surface of the convex part 232 to a certain extent, and then the possibility that the operator contacts the pesticide liquid is reduced. In other words, even if the pesticide liquid flows out through the airflow orifice 21, it substantially can only flow to the concave part 231.

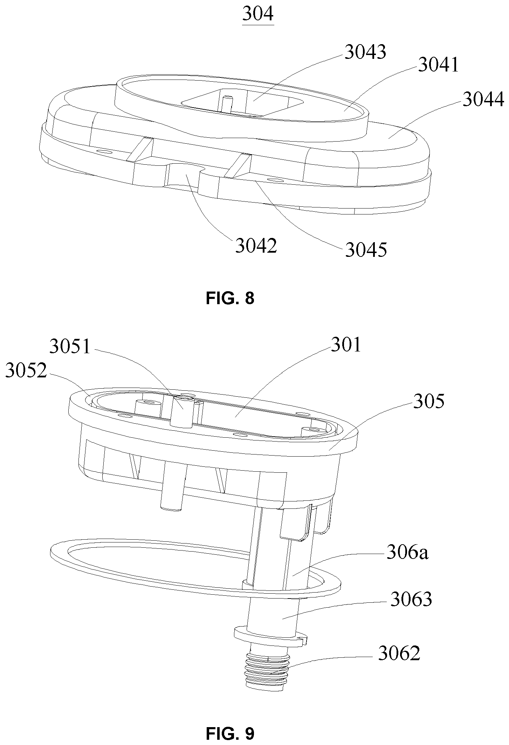

FIG. 8 shows the upper housing body 304 of the measuring assembly 3. The upper housing body 304 comprises a cover body supporting portion 3044, a housing body connecting portion 3045 and a protruding portion 3041, wherein the protruding portion 3041 is formed with a sink groove 3043 which is configured to mount a button circuit board 308. Specifically, the cover body supporting portion 3044 is supported on the top edge of the mounting hole 11, and after the cover body 2 is mounted to the mounting hole 11, it can press the cover body supporting portion 3044 tightly. More specifically, as the inner side of the circumferential wall 201 of the cover body 2 is formed with the internal threads 203 threadedly connected to the mounting hole 11, after the cover body 2 is mounted to the mounting hole 11, the bottom side of the top wall 202 of the cover body 2 is pressed on the cover body supporting portion 3044 tightly.

In combination with FIGs. 3, 6, 8 and 9, the upper housing body 304 can be detachably and hermetically connected with the lower housing body 305, so as to keep the sealing performance of the accommodating cavity 301 and change the elements in the accommodating cavity 301 such as the battery and the mainboard 302. Specifically, the lower housing body 305 can be formed with a circular groove 3052 in the periphery at the side towards the upper housing body 304, and a sealing ring 312 is provided in the circular groove 3052; and the upper housing body 304 is pressed onto the sealing ring 312 and fixed to the lower housing body 305 through a second threaded fastener 316 (for example, a screw) passing through a housing body connecting portion 3045.

The housing body connecting portion 3045 of the upper housing body 304 can be formed with a positioning groove 3042, and the connecting tube 3051 in the lower housing body 305 can pass through the positioning groove 3042 and extend, to define the circumferential relative position of the upper housing body 304 and the lower housing body 305, which makes positioning and mounting convenient.

The cover body 2 can comprise a center through hole 22 at the position corresponding to the protruding portion 3041 of the upper housing body 304. In the mounting state, the cover body 2 is provided to cover the upper housing body 304 and make the protruding portion 3041 extend into the center through hole 22, and the inner side of the top wall 202 of the cover body 2 is supported on the cover body supporting portion 3044 to press and fix the measuring the assembly 3. Specifically, the cover body supporting portion 3044 is supported on the top edge of the mounting hole 11, the cover body 2 presses the cover body supporting portion 3044 tightly, to press and fix the overall measuring assembly 3 to the pesticide tank body 1.

In the present embodiment, the measuring assembly 3 is provided with a button circuit board 308 which is mounted to the upper housing body 304, and the button circuit board 308 can be fixed in the sink groove 3043 through the first threaded fastener 314 (for example, a screw). In order to ensure the sealing of the accommodating cavity 301, the button circuit board 308 can be provided with a waterproof silicone 313 at the side towards the accommodating cavity 301. The button circuit board 308 can be electrically connected to the mainboard 302 through a spring thimble connector 309, and thus, the buttons on the button circuit board 308 can be directly operated through the center through hole 22 in the cover body 2, and the measuring assembly 3 can be started and stopped without disassembling the cover body 2, which effectively improves the convenience in use. In the above, the button circuit board 308 can also be provided with the waterproof silicone 313 at the side facing away from the accommodating cavity 301, and a button film 315 is provided on the top surface of the protruding portion 3041, to improve the appearance and the hand feel during operation.

The measuring assembly 3 senses the changes of the liquid level in the pesticide tank body 1 through the liquid level sensor 303 which is electrically connected to the mainboard 302. The liquid level sensor 303 can be formed in multiple appropriate manners. In the present embodiment, the liquid level sensor 303 can comprise a circuit board and multiple magnetic switches provided on the circuit board, and the magnetic switches can be triggered by the floaters 311 (which will be detailed in the following text) to obtain corresponding liquid level signals. In order to prevent the electronic components from contacting the pesticide liquid in the pesticide tank body 1, in the present embodiment, a sensor casing 306 (specifically, a round casing) is used to isolate the liquid level sensor 303 from the pesticide liquid, and the liquid level sensor 303 can be provided in the sensor casing 306. For example, the above-mentioned circuit board provided with magnetic switches can be of a strip shape and extend into the sensor casing 306. In other words, the measuring assembly 3 further comprises the sensor casing 306 which extends from the lower housing body 305 into the pesticide tank body 1, and the liquid level sensor 303 passes through the lower housing body 305 and extends into the sensor casing 306.

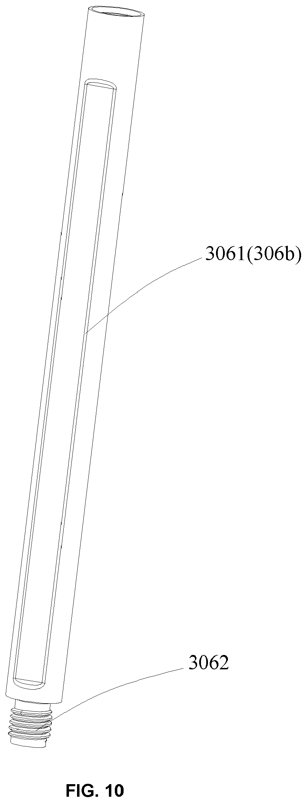

As for the elongated structure of the sensor casing 306, the one-piece molding will lead to higher mold manufacturing cost. In the present embodiment, the sensor casing 306 is configured to comprise a plurality of casing sections 3061 which are detachably connected to one another. As shown in FIGs. 3 and 10, the casing sections 3061 can be formed separately and connected to each other to form the required sensor casing 306. Through such arrangement, the length of the sensor casing 306 which is formed by connection can be selected according to the size (depth) of the matching pesticide tank body 1, and thus the adaptability is better.

The above plurality of casing sections 3061 can have the same or different lengths. As shown in FIG. 3, the plurality of casing sections 3061 of the sensor casing 306 comprise a basic casing section 306a, a continuous casing section 306b and a bottom end casing section 306c. In the above, the basic casing section 306a can be formed integrally with the lower housing body 305 and is connected with one or multiple continuous casing sections 306b at the bottom end, and the continuous casing section 306b is connected with the bottom end casing section 306c at the end away from the basic casing section 306a. In order to achieve convenient connection and ensure relatively good sealing performance, the end portions of the respective casing sections 3061 can be formed with the threaded portion 3062, for example, the continuous casing section 306b can comprise internal threads at one end and external threads at the other end, so as to use the sealing performance of the threaded connection itself to prevent the pesticide liquid from entering the sensor casing 306 through the connecting portion.

The liquid level sensor 303 in the sensor casing 306 can be triggered by the floater 311 which rises and falls along with the changes of the amount of the pesticide liquid, and the floater 311 can keep the distance from the liquid level sensor 303 in an appropriate manner, so as to ensure the accuracy of the measurement. In FIGs. 2 and 3, the measuring assembly 3 further comprises a floater guide rod 310 which extends in parallel with the sensor casing 306, and the floater 311 is slidably sleeved on the floater guide rod 310.

The floater guide rod 310 can be a hollow stainless steel tube, so as to reduce the corrosion rate of the pesticide liquid. The floater guide rod 310 is provided with a clip 317 at one end, and configured to be clamped and fixed with the clamping groove 3063 in the top portion of the sensor casing 306, the floater guide rod 310 is provided with a limit piece 319 with a circumferential limit structure at the other end, and configured to be fixed with the bottom portion of the sensor casing 306 through a threaded end cover 318, so as to have relatively good assembling performance and measurement accuracy.

Specifically, a clamping groove 3063 is provided at a position of the basic casing section 306a corresponding to the top end portion of the floater guide rod 310, and the clip 317 can be clamped in the clamping groove 3063; the bottom end casing section 306c is formed with a circumferential limit structure cooperating with the limit piece 319 on the outer circumferential wall, so as to define the circumferential relative position of the floater guide rod 310 and the sensor casing 306, to prevent the bottom end of the floater guide rod 310 from rotating around the center axis of the sensor casing 306, have the floater 311 float up and down in the direction parallel to the center axis of the sensor casing 306, and then ensure relatively high measuring accuracy.

The circumferential limit structure of the bottom end casing section 306c and the limit piece 319 mentioned previously can be an outer gear portion 3064 formed on the outer circumferential surface at the bottom end portion of the bottom end casing section 306c and an inner gear portion 3191 formed on the limit piece 319, as shown in FIG. 4. Thus, for the convenience of assembling, the limit piece 319 can be formed with a through hole and a blind hole spaced apart from each other and extending in parallel, the inner gear portion 3191 is formed in the through hole, the floater guide rod 310 is inserted into the blind hole, and the limit piece 319 can be fixed by the threaded end cover 318 which is connected to the bottom end of the sensor casing 306. During assembly, the plurality of casing sections 3061 can firstly be connected to each other to form the sensor casing 306, and then the limit piece 319 is sleeved on the bottom end casing section 306c and makes the circumferential limit structures cooperate with each other, and then the threaded end cover 318 is threaded to the bottom end of the sensor casing 306 to clamp and fix the limit piece 319 and close the bottom end opening (if any) of the sensor casing 306. Subsequently, the bottom end of the floater guide rod 310 which is connected with the clip 317 is inserted into the blind hole of the limit piece 319, and the clip 317 is clamped to the clamping groove 3063 in the sensor casing 306.

In order to implement better plant protection operation, besides monitoring the liquid level in the pesticide tank body 1, the measuring assembly 3 can also be used to monitor the temperature of the pesticide liquid. Thus, a temperature sensor can be provided at the bottom end portion of the sensor casing 306, for example, the temperature sensor can be provided on the bottom end casing section 306c.

The present embodiment also provides a plant protection machinery, and the plant protection machinery comprises the above-mentioned intelligent pesticide tank assembly 100.

The plant protection machinery can be a plant protection drone, and the intelligent pesticide tank assembly 100 is mounted on the main body of the plant protection drone. The plant protection machinery can also be a plant protection driverless car, and the intelligent pesticide tank assembly 100 is mounted on the vehicle body of the plant protection driverless car. The plant protection machinery comprises all the functions of the intelligent pesticide tank assembly 100.

### In some embodiments:

Referring to FIG. 1, FIG.1 shows that the intelligent pesticide tank assembly 100 comprises the pesticide tank body 1, the cover body 2 and the measuring assembly 3. The interior of the pesticide tank body 1 forms the inner cavity 12 configured to accommodate the pesticide liquid, and the pesticide tank body 1 is provided with the mounting hole 11 with the external threads 111 in the top wall, the mounting hole 11 communicates with the inner cavity 12, and the measuring assembly 3 extends into the inner cavity 12 through the mounting hole 11. The internal threads 203 cooperating with the external threads 111 are provided on the inner side of the circumferential wall 201 of the cover body 2; the cover body 2 is in threaded cooperation with the mounting hole 11 to close the mounting hole 11, meanwhile, the bottom side of the top wall 202 of the cover body 2 is pressed against the top portion of the measuring assembly 3, and the measuring assembly 3 is pressed and fixed in the pesticide tank body 1. When the cover body 2 and the measuring assembly 3 are disassembled from the pesticide tank body 1, the inner cavity 12 is communicated with the outer space 200 through the mounting hole 11.

Referring to FIG. 2, FIG. 2 shows that the cover body 2 cooperates with the measuring assembly 3 and is covered on the top portion of the measuring assembly 3. The measuring assembly 3 comprises the ventilating tube 307, and the sensor casing 306 and the floater guide rod 310 arranged in parallel; and the bottom portions of the sensor casing 306 and floater guide rod 310 are fixed through the limit piece 319, and the floater 311 is slidably sleeved on the floater guide rod 310.

Referring to FIG. 3, FIG. 3 shows that the measuring assembly 3 comprises the mainboard 302, the liquid level sensor 303, the upper housing body 304, the lower housing body 305, the sensor casing 306, the ventilating tube 307, the button circuit board 308, the spring thimble connector 309, the floater guide rod 310, the floater 311, the sealing ring 312, the waterproof silicone 313, the first threaded fastener 314, the button film 315, the second threaded fastener 316, the clip 317, the threaded end cover 318 and the limit piece 319. The lower housing body 305 is provided with the sealing ring 312 at the side close to the upper housing body 304; the upper housing body 304 and the lower housing body 305 are connected and fixed to each other through the second threaded fastener 316; the upper housing body 304 abuts against the sealing ring 312 to achieve the hermetical connection, so that the mainboard 302 is accommodated between the upper housing body 304 and the lower housing body 305. The button circuit board 308 is fixed to the upper housing body 304 through the first threaded fastener 314; the button circuit board 308 is provided with the waterproof silicone 313 at two opposite sides; and the button circuit board 308 is electrically connected with the mainboard 302 through the spring thimble connector 309. The buttons of the button circuit board 308 are covered with the button film 315, and the buttons extend out through the holes in the center of the cover body 2. The ventilating tube 307 is connected to the lower housing body 305 at both ends. The sensor casing 306 comprises a plurality of casing sections 3061 arranged in sequence (shown in FIG. 10), and specifically, it comprises the basic casing section 306a, the continuous casing section 306b and the bottom end casing section 306c arranged in sequence, and the top end of the basic casing section 306a is connected with the lower housing body 305. The liquid level sensor 303 is provided in the sensor casing 306. The top end of the floater guide rod 310 is clamped with the basic casing section 306a through the clip 317; the bottom end of the floater guide rod 310 is fixed with the limit piece 319 and fixed to the bottom end of the bottom end casing section 306c through the threaded end cover 318. The floater 311 is slidably sleeved on the floater guide rod 310.

Referring to FIG. 4, FIG. 4 shows that the end portions of two adjacent casing sections 3061 are threadedly fixed through the threaded portion 3062. The bottom end casing section 306c is provided with the outer gear portion 3064 at the bottom end; the limit piece 319 is provided with the inner gear portion 3191 engaging with the outer gear portion 3064; and the threaded end cover 318 passes through the inner gear portion 3191 and is fixed to the bottom end of the bottom end casing section 306c.

Referring to FIG. 5, FIG. 5 shows that the cover body 2 is of a cylindrical shape, and it comprises a large diameter part 23 and a small diameter part 24 that are axially connected to each other. The outer diameter of the large diameter part 23 is larger than the outer diameter of the small diameter part 24, and the outer circumferential wall of the large diameter part 23 is formed with a concave part 231 and a convex part 232 which are alternatively arranged. The airflow orifice 21 is formed in a connecting position of the large diameter part 23 and the small diameter part 24, and specifically, provided in the small diameter part 24, and there are multiple airflow orifices, they are distributed at uniform interval in the circumferential direction of the cover body 2. The cover body 2 is provided with the center through hole 22 in the center.

Referring to FIGs. 6 and 7, FIGs. 6 and 7 show that the measuring assembly 3 comprises the upper housing body 304 and the lower housing body 305 which are hermetically connected through the second threaded fastener 316. The lower housing body 305 is provided with the connecting tube 3051 and the communicating tube 3053, the ventilating tube 307 is connected with the connecting tube 3051 and the communicating tube 3053 respectively at the two ends; one end of the ventilating tube 307 communicates with the outer space 200 through the air flow channel 30511 of the connecting tube 3051, and the other end of the ventilating tube 307 communicates with the lower space of the lower housing body 305 through the notch 3053a in the communicating tube 3053 (in the mounting state, it communicates with the inner cavity 12 of the pesticide tank body 1). The top end of the sensor casing 306 is connected with the lower housing body 305, the floater guide rod 310 is arranged with the sensor casing 306 in parallel, the top end of the floater guide rod 310 is clamped and fixed to the top end of the sensor casing 306 through the clip 317, and the bottom end of the floater guide rod 310 is fixed to the bottom end of the sensor casing 306 through the limit piece 319 and the threaded end cover 318. The floater 311 is slidably sleeved on the floater guide rod 310.

Referring to FIG. 8, FIG. 8 shows that the upper housing body 304 comprises the protruding portion 3041, the cover body supporting portion 3044 and the housing body connecting portion 3045 which are integrally molded, and the protruding portion 3041 is formed with a sink groove 3043 which is configured to mount the button circuit board 308. The housing body connecting portion 3045 is formed with a positioning groove 3042, so that the connecting tube 3051 on the lower housing body 305 can pass through the positioning groove 3042 and extend.

Referring to FIG. 9, FIG. 9 shows that the lower housing body 305 comprises the accommodating cavity 301, and is arranged with the connecting tube 3051 and the circular groove 3052, and the circular groove 3052 is configured to assemble the sealing ring 312. The bottom end of the lower housing body 305 is connected with the basic casing section 306a, and the basic casing section 306a is provided with a clamping groove 3063 cooperating with the clip 317. The basic casing section 306a is provided with the threaded portion 3062 at the bottom end.

Referring to FIG. 10, FIG. 10 shows that the casing section 3061 is a continuous casing section 306b which is provided with the threaded portion 3062 at the bottom end.

The specific embodiments of the present disclosure are described above in details in conjunction with the accompanying drawings, but the present disclosure is not limited to this. Within the scope of the technical idea of the present disclosure, various simple transformations can be made to the technical solutions of the present disclosure. For example, the housing body configured to form the accommodating cavity 301 is not necessarily divided into the upper housing body 304 and the lower housing body 305, the connecting tube 3051 can also be configured to pass through the accommodating cavity 301 and extend, and such simple transformations further comprise the combinations of the respective technical features in any appropriate manners. In order to avoid unnecessary repetitions, the present disclosure no longer provides additional explanation to various possible combination methods, while such simple transformations and combinations should also be deemed as the contents of the present disclosure, and fall within the protection scope of the present disclosure.

### Industrial applicability

To sum up, the present disclosure provides an intelligent pesticide tank assembly and a plant protection machinery, and the intelligent pesticide tank assembly has a simply structure and can be operated conveniently during mounting, disassembling and manipulating.

## Claims

1. An intelligent pesticide tank assembly, comprising a cover body (2) and a measuring assembly (3), wherein the measuring assembly (3) is configured to be mounted to extend into a pesticide tank body (1), and the cover body (2) is arranged to be able to be connected to the pesticide tank body (1) and to enable the measuring assembly (3) to be fixed onto the pesticide tank body (1) in a tightly pressing manner.

2. The intelligent pesticide tank assembly according to claim 1, wherein the pesticide tank body (1) is provided with a mounting hole (11), the measuring assembly (3) comprises a cover body supporting portion (3044) that supports on a top edge of the mounting hole (11), and the cover body (2) can be configured to be pressed tightly onto the cover body supporting portion (3044).

3. The intelligent pesticide tank assembly according to claim 2, wherein the cover body (2) comprises a circumferential wall (201) and a top wall (202), wherein internal threads (203) is provided at an inner side of the circumferential wall (201), wherein the internal threads (203) are configured to be threadedly connected to the mounting hole (11), and the cover body (2) is pressed tightly onto the cover body supporting portion (3044) through a bottom side of the top wall (202).

4. The intelligent pesticide tank assembly according to any one of claims 1-3, wherein the measuring assembly (3) comprises an accommodating cavity (301) and a mainboard (302) mounted in the accommodating cavity (301), wherein the mainboard (302) is electrically connected with a liquid level sensor (303) which extends into the pesticide tank body (1).

5. The intelligent pesticide tank assembly according to claim 4, wherein the measuring assembly (3) comprises an upper housing body (304) and a lower housing body (305), wherein the upper housing body (304) is detachably and hermetically connected to the lower housing body (305), so as to form the accommodating cavity (301) accommodating the mainboard (302).

6. The intelligent pesticide tank assembly according to claim 5, wherein the measuring assembly (3) further comprises a sensor casing (306) which extends from the lower housing body (305) into the pesticide tank body (1), and the liquid level sensor (303) passes through the lower housing body (305) and extends into the sensor casing (306).

7. The intelligent pesticide tank assembly according to claim 6, wherein the sensor casing (306) comprises a plurality of casing sections (3061) which are detachably connected to each other.

8. The intelligent pesticide tank assembly according to claim 6 or 7, wherein the measuring assembly (3) further comprises a floater guide rod (310) which extends in parallel to the sensor casing (306), wherein a floater (311) is slidably sleeved on the floater guide rod (310), wherein the floater (311) is configured to trigger the liquid level sensor (303).

9. The intelligent pesticide tank assembly according to claim 8, wherein a clip (317) is provided at one end of the floater guide rod (310), wherein the clip (317) is configured to be fixed, in a clamping manner, with a clamping groove (3063) in a top portion of the sensor casing (306), and a limit piece (319) is provided at the other end of the floater guide rod (310), wherein the limit piece (319) is configured to be fixed with a bottom portion of the sensor casing (306) through a threaded end cover (318).

10. The intelligent pesticide tank assembly according to any one of claims 5-9, wherein a circular groove (3052) is provided in a periphery of a side of the lower housing body (305) towards the upper housing body (304), and a sealing ring (312) is provided in the circular groove (3052); and the upper housing body (304) is pressed tightly onto the sealing ring (312) and fixed to the lower housing body (305) by a second threaded fastener (316), wherein the second threaded fastener (316) passes through the housing body connecting portion (3045) of the upper housing body (304).

11. The intelligent pesticide tank assembly according to any one of claims 5-10, wherein the lower housing body (305) is provided with a connecting tube (3051), wherein the connecting tube (3051) comprises an air flow channel (30511) which is isolated from the accommodating cavity (301), wherein the air flow channel (30511) is provided so that the inner cavity (12) of the pesticide tank body (1) is communicated with outer space (200).

12. The intelligent pesticide tank assembly according to claim 11, wherein a positioning groove (3042) is provided at the housing body connecting portion (3045) of the upper housing body (304), and the connecting tube (3051) on the lower housing body (305) passes through the positioning groove (3042) to extend, so as to define a circumferential relative position of the upper housing body (304) and the lower housing body (305).

13. The intelligent pesticide tank assembly according to claim 11 or 12, wherein the cover body (2) is provided with an airflow orifice (21), the connecting tube (3051) is connected with a ventilating tube (307), and the inner cavity (12) of the pesticide tank body (1) is in communication with the outer space (200) sequentially through the ventilating tube (307), the connecting tube (3051) and the airflow orifice (21).

14. The intelligent pesticide tank assembly according to claim 13, wherein the ventilating tube (307) comprises at least one complete spiral, and the lower housing body (305) is further provided with a communicating tube (3053) which is spaced apart from the connecting tube (3051); and the ventilating tube (307) has one end connected to the connecting tube (3051), and the other end connected to the communicating tube (3053) and communicating with the inner cavity (12) of the pesticide tank body (1) through the communicating tube (3053).

15. The intelligent pesticide tank assembly according to claim 14, wherein a notch (3053a) is provided in a side wall of the communicating tube (3053), the ventilating tube (307) is inserted into the communicating tube (3053), and is able to communicate with the inner cavity (12) of the pesticide tank body (1) through the notch (3053a).

16. The intelligent pesticide tank assembly according to any one of claims 13-15, wherein the cover body (2) is of a cylindrical shape, and comprises a large diameter part (23) and a small diameter part (24) that are axially connected to each other, wherein an outer diameter of the large diameter part (23) is larger than an outer diameter of the small diameter part (24); an inner circumferential wall of the large diameter part (23) is provided with the internal threads (203) threadedly connected to the mounting hole (11) of the pesticide tank body (1); and the large diameter part (23) is provided with concave parts (231) and convex parts (232) that are alternatively arranged on an outer circumferential wall, and the airflow orifice (21) is provided in the small diameter part (24).

17. The intelligent pesticide tank assembly according to any one of claims 5-16, wherein the measuring assembly (3) is provided with a button circuit board (308) mounted on the upper housing body (304), wherein the button circuit board (308) is electrically connected to the mainboard (302) through a spring thimble connector (309).

18. The intelligent pesticide tank assembly according to claim 17, wherein the cover body (2) is provided with a center through hole (22), and the upper housing body (304) is provided with a protruding portion (3041) cooperating with the center through hole (22), so as to allow to control buttons on the button circuit board (308) through the center through hole (22).

19. A plant protection machinery, wherein the plant protection machinery comprises the intelligent pesticide tank assembly (100) according to any one of claims 1-18.
